Europäisches Patentamt

(19) European Patent Office

Office européen des brevets

(11) Numéro de publication: **0 275 770 B1**

(12) **FASCICULE DE BREVET EUROPEEN**

(45) Date de publication de fascicule du brevet:
16.10.91

(21) Numéro de dépôt: **87402920.0**

(22) Date de dépôt: **18.12.87**

(51) Int. Cl.5: **B01D 3/10**, B01D 3/06,
C10G 7/06, C10G 31/10

(54) Procédé et installation pour distiller des produits liquides thermosensibles.

(30) Priorité: **19.12.86 FR 8617816**

(43) Date de publication de la demande:
**27.07.88 Bulletin 88/30**

(45) Mention de la délivrance du brevet:
**16.10.91 Bulletin 91/42**

(84) Etats contractants désignés:
**AT BE CH DE ES GB GR IT LI LU NL SE**

(56) Documents cités:
FR-A- 1 282 602      FR-A- 1 591 064
GB-A- 1 548 096      US-A- 1 699 379
US-A- 1 954 839      US-A- 4 394 219

(73) Titulaire: **SPIE-BATIGNOLLES (société anonyme)**
**Tour Anjou 33, Quai de Dion-Bouton**
**F-92814 Puteaux(FR)**

Titulaire: **ELECTRICITE DE FRANCE Service National**
**2, rue Louis Murat**
**F-75008 Paris(FR)**

(72) Inventeur: **Cros, Pierre**
**167 Boulevard Murat**
**F-75016 Paris(FR)**
Inventeur: **Daumas, Christian**
**100 rue Lauriston**
**F-75016 Paris(FR)**

(74) Mandataire: **Bouju, André et al**
**Cabinet André Bouju B.P. 6250**
**F-75818 Paris Cédex 17(FR)**

Rank Xerox (UK) Business Services

## Description

La présente invention concerne un procédé pour distiller des produits liquides hydrocarbonés thermosensibles, en particulier le résidu pétrolier soutiré du fond de la colonne de distillation atmosphérique d'une raffinerie de pétrole brut.

Dans les raffineries de pétrole brut connues, le résidu pétrolier est soutiré à 320-350°C du fond de la colonne de distillation atmosphérique et est envoyé dans un four où il est chauffé à une température de l'ordre de 390 à 410°C. Cette température correspond à la valeur maximale admissible pour éviter toute dégradation thermique.

Le produit pétrolier sortant du four est envoyé dans une tubulure de grand diamètre (1 à 1,5 m) dans laquelle il se vaporise partiellement avant d'être introduit dans une colonne de distillation sous pression réduite ayant un diamètre de l'ordre de 6 mètres. La pression régnant à la partie supérieure de cette colonne est de l'ordre de 20 mm de Hg. Le produit introduit dans cette colonne se vaporise brutalement dans une zone où la pression est de l'ordre de 40 à 60 mm de Hg. Les demanderesses se sont posées le problème de pouvoir vaporiser la plus grande partie possible du résidu précité pour minimiser ainsi la quantité de résidu non distillé. A cet effet, il faut pouvoir chauffer le résidu à la température la plus élevée possible sans déclencher une dégradation thermique de ce produit à la pression minimale dans la colonne de distillation sous pression réduite.

Or, le four utilisé pour chauffer le résidu fonctionne déjà aux conditions limites à l'égard du craquage (température égale à 390-410°C, pression de l'ordre de 1 bar). De plus, la tubulure de transfert utilisée actuellement pour transférer le produit sortant du four dans la colonne de distillation sous pression réduite et dans laquelle a lieu une part importante de la vaporisation par détente du produit d'environ 1 bar jusqu'à environ 0,2 bar, ne sert ni à chauffer le produit ni à séparer les phases liquide et gazeuse.

Le brevet français 2 323 423 dont la société SPIE-BATIGNOLLES est titulaire, décrit un procédé pour chauffer le pétrole brut avant son introduction dans la colonne de distillation atmosphérique d'une raffinerie de pétrole. Dans ce procédé, on utilise une succession d'échangeurs séparateurs en série chauffés au moyen de vapeur d'eau. Cette succession d'échangeurs séparateurs permet d'obtenir des phases gazeuses qui sont introduites à différents niveaux dans la colonne de distillation atmosphérique, ce qui favorise la distillation, en évitant une surchauffe inutile du produit.

Ce procédé de chauffage à la vapeur d'eau n'est toutefois pas adapté à la distillation sous pression réduite d'un produit pétrolier et chimique sensible à la dégradation thermique compte tenu du niveau des températures mises en jeu.

Le but de la présente invention est de remédier aux inconvénients de l'état de la technique ci-dessus en créant un procédé qui permette de vaporiser davantage les produits liquides hydrocarbonés thermosensibles, en évitant leur dégradation thermique et en minimisant la quantité de résidu non distillé.

Suivant l'invention, le procédé pour distiller des produits liquides hydrocarburés thermosensibles, en particulier le résidu pétrolier soutiré du fond de la colonne de distillation atmosphérique d'une raffinerie de pétrole brut, dans lequel ces produits sont chauffés dans un four à la température maximale admissible pour éviter toute dégradation thermique puis sont introduits dans au moins une colonne de distillation sous pression réduite, est caractérisé :

- en ce que le produit liquide sortant du four est introduit dans une série d'étages de séparation par centrifugation dans lesquels la pression est intermédiaire entre la pression atmosphérique et celle régnant dans la colonne de distillation sous pression réduite, cette pression décroissant successivement dans les étages de séparation,
- en ce que le produit liquide est amené au contact de la paroi latérale de chaque étage de séparation et est chauffé par celle-ci à une température suffisante pour le vaporiser partiellement, cette température étant proche de la valeur maximale admissible pour éviter toute dégradation thermique,
- en ce que la phase vapeur formée dans chaque étage est prélevée dans la zone centrale de l'étage et introduite dans la colonne de distillation sous pression réduite,
- en ce que la phase liquide obtenue dans chaque étage est prélevée et est réintroduite dans l'étage de séparation suivant ou directement introduite dans la colonne de distillation dans le cas du dernier étage.

Grâce à ce procédé, le produit est séparé dans chaque étage de séparation en une phase liquide qui est envoyée dans l'étage suivant et une phase vapeur qui est envoyée directement dans une colonne de distillation sous pression réduite.

Grâce à ces étages successifs de séparation dans lesquels règnent des pressions décroissantes intermédiaires entre la pression atmosphérique et celle régnant dans la colonne de distillation sous pression réduite et grâce au complément de chauffage réalisé sur la seule phase liquide, le procédé selon l'invention permet de vaporiser davantage le produit pétrolier ou chimique et de récupérer ainsi davantage de produits distillés.

En effet, les phases liquides de plus en plus denses, difficiles à vaporiser, sont chauffées à des pressions décroissantes. Le flux de chauffage peut être réglé pour chaque phase liquide à une valeur optimale pour la vaporisation et en même temps pour éviter tout risque de dégradation thermique.

Selon une version avantageuse de l'invention, les phases vapeur prélevées dans les étages de séparation sont introduites dans la colonne de distillation à des niveaux différents de celle-ci. Cette mesure permet de favoriser la distillation dans la colonne sous pression réduite.

Selon un autre aspect de l'invention, l'installation pour distiller des produits liquides hydrocarbonés thermosensibles, en particulier le résidu pétrolier soutiré du fond de la colonne de distillation atmosphérique d'une raffinerie de pétrole brut, comprenant un four dans lequel ces produits sont chauffés à la température maximale admissible pour éviter toute dégradation thermique, ce four étant relié à une colonne de distillation sous pression réduite, est caractérisée :

- en ce que le four est relié à la colonne de distillation sous pression réduite par l'intermédiaire d'une série de séparateurs centrifuges dans lesquels la pression est intermédiaire entre la pression atmosphérique et celle régnant dans la colonne de distillation sous pression réduite, cette pression décroissant successivement dans les séparateurs,
- en ce que chaque séparateur comporte une entrée d'alimentation du produit à vaporiser pour mettre ce produit en contact avec la paroi latérale du séparateur,
- en ce que chaque séparateur comporte une tubulure pour prélever dans sa zone centrale, la phase vapeur formée dans chaque séparateur, cette tubulure étant reliée à la colonne de distillation sous pression réduite,
- en ce que chaque séparateur comporte à sa partie inférieure une tubulure reliée à l'entrée d'alimentation du séparateur suivant ou directement reliée à la colonne de distillation sous pression réduite dans le cas du dernier séparateur, et
- en ce que des moyens sont prévus pour chauffer la paroi latérale de chaque séparateur à une température proche de la température maximale admissible pour éviter toute dégradation thermique du produit.

Aux dessins annexés, donnés à titre d'exemples non limitatifs :

- la figure 1 est une vue schématique d'une installation conforme à l'invention,
- la figure 2 est une vue en perspective, avec arrachement de son enveloppe chauffante extérieure, d'un séparateur centrifuge de l'installation selon l'invention.

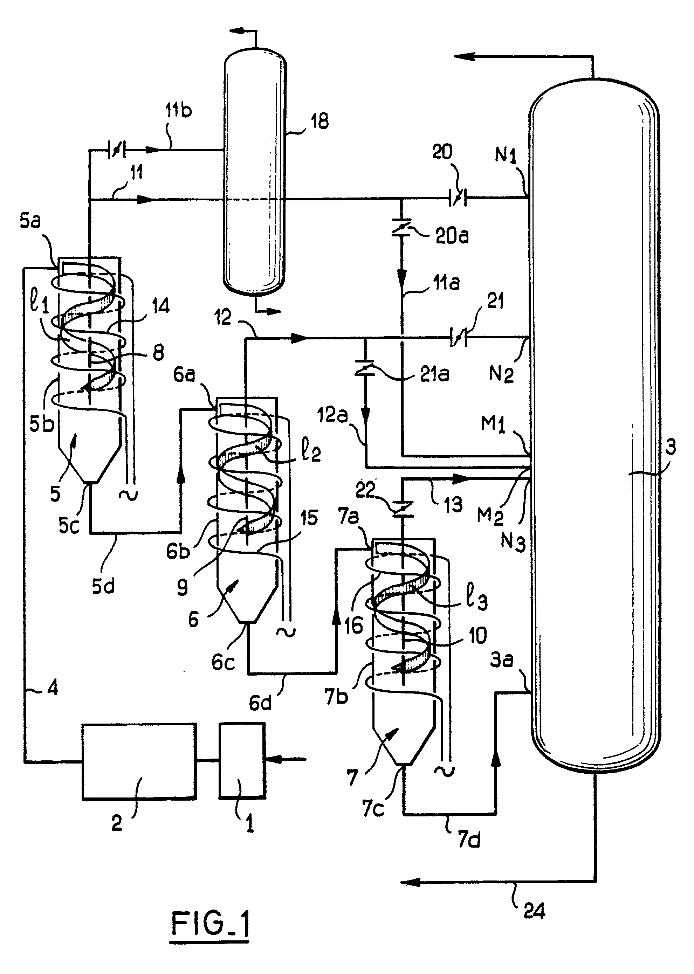

En référence à la figure 1, dans le procédé pour distiller le résidu pétrolier soutiré du fond de la colonne de distillation atmosphérique 1 d'une raffinerie de pétrole brut, est chauffé dans un four 2 à la température maximale (soit 390 à 420°C) admissible pour éviter la dégradation thermique.

Selon l'invention, le produit pétrolier 4 sortant du four, avant d'être envoyé dans la colonne 3 de distillation sous pression réduite (20 à 60 mm de Hg) est introduit dans une série de cyclones séparateurs 5, 6, 7 dans lesquels la pression est intermédiaire entre la pression atmosphérique et celle régnant dans la colonne 3 de distillation sous pression réduite, cette pression décroissant successivement dans les cyclones 5, 6, 7, entre la pression atmosphérique et environ 60 mm de Hg. Le produit 4 à vaporiser est introduit tangentiellement à l'entrée supérieure 5a, 6a, 7a de chaque cyclone 5, 6, 7 pour mettre ce produit en contact avec la paroi latérale 5b, 6b, 7b des cyclones, suivant des trajets hélicoïdaux $1_1$, $1_2$, $1_3$ dirigés vers le bas.

La phase gazeuse 11, 12, 13 formée dans chaque cyclone 5, 6, 7 est prélevée dans la zone centrale 8, 9, 10 du cyclone et introduite directement dans la colonne 3 de distillation à pression réduite à des niveaux $N_1$, $N_2$, $N_3$ décroissants.

Les tubulures 11, 12, 13 comprennent de préférence des dispositifs (non représentés) tels que des matelas pour éviter l'entraînement de gouttelettes de liquide.

La phase liquide obtenue dans chaque cyclone est prélevée à la sortie inférieure 5c, 6c, 7c des cyclones puis est réintroduite tangentiellement à la partie supérieure 6a, 7a du cyclone suivant ou directement introduite dans la colonne 3 de distillation dans le cas du dernier cyclone 7.

Par ailleurs, la paroi latérale 5b, 6b, 7b de chaque cyclone 5, 6, 7 est chauffée à une température proche de la température maximale admissible pour éviter la dégradation thermique du produit.

La tubulure 5d, 6d de prélèvement de la phase liquide qui relie chaque cyclone au suivant est conformée de façon à constituer une garde de liquide suffisante pour maintenir les différences de pression entre les cyclones 5, 6, 7.

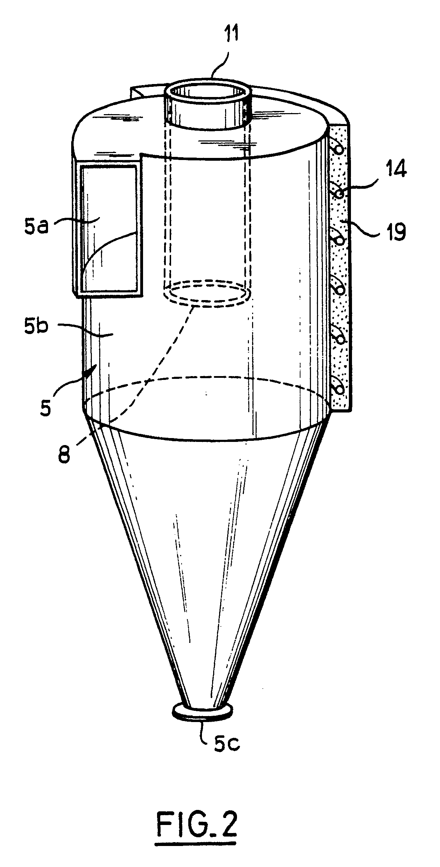

On voit sur la figure 1 et en particulier sur la figure 2, que les moyens pour chauffer la paroi latérale 5b, 6b, 7b de chaque cyclone comprennent une résistance électrique 14, 15, 16 enroulée autour de cette paroi et noyée dans un revêtement 9 en matière électriquement isolante et calorifuge. Cette résistance électrique est reliée à des moyens de régulation qui permettent d'ajuster avec précision le flux de chauffage et donc la température des parois 5b, 6b et 7b.

On voit également sur la figure 2 que l'entrée tangentielle telle que 5a des cyclones a une importante section pour limiter les pertes de charge.

La tubulure 11, 12, 13 de prélèvement de la phase gazeuse dans chaque cyclone 5, 6, 7 reliée à la colonne 3 de distillation sous pression réduite comprend une dérivation 11a, 12a reliée à cette colonne à une altitude $M_1$, $M_2$ inférieure à celle $N_1$, $N_2$ de cette tubulure.

Des vannes 20, 20a, 21, 21a, 22 placées sur les tubulures 11, 11a, 12, 12a et 13 permettent de régler les débits de vapeur dans ces tubulures et la pression à l'intérieur des cyclones.

On voit également sur la figure 1 que la tubulure 11 reliée à la sortie des gaz du premier cyclone 5 comporte une dérivation 11b permettant d'envoyer une partie ou la totalité de ces gaz dans une colonne de distillation 18 de petite dimension et dans laquelle règne une pression sensiblement égale à celle régnant dans le premier cyclone 5.

Les principaux avantages du procédé et de l'installation que l'on vient de décrire sont les suivants :

La succession des cyclones 5, 6, 7 remplace la ligne de transfert classique qui relie directement le four 2 à la colonne 3 de distillation sous pression réduite. Cette adaptation ne nécessite ainsi aucune modification profonde des installations classiques.

Etant donné que dans chaque cyclone 5, 6, 7 le produit pétrolier s'écoule le long de la paroi latérale du cyclone sous la forme d'une couche mince, on réalise un excellent transfert de chaleur entre les résistances extérieures 14, 15, 16 et ce film.

Du fait que le flux de chauffage des parois latérales 5a, 6a, 7a des cyclones peut être réglé avec une très grande précision (de l'ordre de $1W/cm^2$), la température correspondante peut être maintenue proche de la valeur maximale admissible pour éviter la dégradation thermique dans les conditions régnant dans les différents cyclones. Le flux de chauffage de la phase liquide peut être différent dans chaque cyclone et adapté à la stabilité thermique des différentes phases liquides.

La pression décroissante régnant dans les cyclones successifs 5, 6, 7 peut être obtenue grâce aux gardes de liquides 5d, 6d, 7d formées à la partie inférieure de ces cyclones.

Les phases gazeuses prélevées dans les zones centrales 8, 9, 10 des cyclones présentent des densités croissantes. Elles peuvent ainsi être envoyées dans la colonne 3 à des altitudes décroissantes, ce qui favorise la distillation.

Dans l'exemple représenté sur la figure 1, une partie ou la totalité des gaz comportant une proportion importante de gaz incondensables tels que l'azote, le méthane ou l'éthane sortant du premier cyclone 5 est envoyée dans une colonne de distillation 18 de petite dimension au lieu d'être envoyée directement dans la colonne 3. Ainsi par dérivation de gaz incondensables, l'obtention d'une pression réduite dans la colonne 3 est facilitée, ce qui ne peut que favoriser l'efficacité de l'opération globale.

Grâce à toutes ces dispositions, on vaporise une plus grande partie du résidu de pétrole brut et on diminue la quantité de résidu non distillé qui est récupéré en 24 à la partie inférieure de la colonne 3.

On donne ci-après un exemple détaillé de réalisation de l'invention.

On soutire à raison de 200 tonnes/h le résidu à 350°C du fond de la colonne 1 de distillation atmosphérique et on le pompe vers le four 2 où il est chauffé à 400-420°C.

A la sortie du four 2, la pression est de l'ordre de 1 bar. Les pressions à l'intérieur des cyclones 5, 6, 7 sont égales respectivement à 700, 400 et 100 mm de Hg.

Les cyclones 5, 6, 7 ont par exemple un diamètre égal à 2 m et une hauteur égale à 8 m. Ils présentent une surface extérieure égale à 50 $m^2$ chauffée au moyen d'une résistance électrique ou par induction.

Le flux de chauffage est limité à $1W/cm^2$ pour éviter la dégradation thermique. La puissance totale de chauffage par cyclone est ainsi égale à 500 kW.

Le gain total du produit vaporisé peut atteindre dans cet exemple 5 à 10% en poids du résidu soutiré du fond de la colonne de distillation atmosphérique, soit 2,5 à 5% du pétrole brut envoyé dans cette dernière.

Or, chaque pourcent de pétrole brut distillé en plus apporte un gain de 3,50 à 7,00 F. par tonne au tarif actuel.

Ainsi, pour une unité de traitement du pétrole brut de 4 millions de tonnes par an, chaque pourcent de pétrole brut distillé en plus apporte une plus value de 14 à 28 MF par an.

Compte tenu de la consommation électrique qui est au maximum de 300 KWh/tonne et du montant de l'investissement nécessaire pour réaliser l'installation, le temps de retour brut est inférieur à 1 an.

Bien entendu, l'invention n'est pas limitée à l'exemple de réalisation que l'on vient de décrire et on peut apporter à celui-ci de nombreuses modifications sans sortir du cadre de l'invention.

Par aileurs, les cyclones 5, 6, 7 de conception classique pourraient être remplacés par les dispositifs séparateurs de phases décrits dans le brevet français 76 20526 du 5 juillet 1976, qui sont encore plus performants.

Bien entendu, l'invention peut s'appliquer à la distillation de tout produit liquide thermosensible autre que les résidus pétroliers de la colonne de distillation atmosphérique d'une raffinerie de pétrole.

Par ailleurs, d'autres moyens que les gardes de liquides 5d, 6d et 7d pourraient être utilisés pour maintenir des différences de pression déterminées entre les différents cyclones ou séparateurs.

**Revendications**

1. Procédé pour distiller des produits liquides hydrocarbonés thermosensibles, en particulier le résidu pétrolier soutiré du fond de la colonne de distillation atmosphérique (1) d'une raffinerie de pétrole brut, dans lequel ces produits sont chauffés dans un four (2) à la température maximale admissible pour éviter toute dégradation thermique puis sont introduits dans au moins une colonne de distillation sous pression réduite, caractérisé :
   - en ce que le produit liquide (4) sortant du four (2) est introduit dans une série d'étages (5, 6, 7) de séparation par centrifugation dans lesquels la pression est intermédiaire entre la pression atmosphérique et celle régnant dans la colonne (3) de distillation sous pression réduite, cette pression décroissant successivement dans les étages de séparation (5, 6, 7),
   - en ce que le produit liquide est amené au contact de la paroi latérale de chaque étage de séparation et est chauffé par celle-ci à une température suffisante pour le vaporiser partiellement, cette température étant proche de la valeur maximale admissible pour éviter toute dégradation thermique,
   - en ce que la phase vapeur (11, 12, 13) formée dans chaque étage est prélevée dans la zone centrale (8, 9, 10) de l'étage et introduite dans une colonne de distillation sous pression réduite, et
   - en ce que la phase liquide obtenue dans chaque étage est prélevée et est réintroduite dans l'étage de séparation suivant ou directement introduite dans la colonne (3) de distillation dans le cas du dernier étage (7).

2. Procédé conforme à la revendication 1, caractérisé en ce que les étages de séparation (5, 6, 7) sont des cyclones.

3. Procédé conforme à l'une des revendications 1 ou 2, appliqué à la distillation de résidus pétroliers atmosphériques, caractérisé en ce que la température régnant à l'intérieur du four (2) est comprise entre 390 et 420°C, en ce que la pression à l'intérieur de la colonne (3) de distillation sous pression réduite est comprise entre 10 et 60 mm de Hg, et en ce que la pression à l'intérieur des étages de séparation (5, 6, 7) décroît successivement entre la pression atmosphérique et environ 60 mm de Hg.

4. Procédé conforme à l'une des revendications 2 ou 3, caractérisé en ce que les phases vapeur (11, 12, 13) prélevées dans les cyclones (5, 6, 7) sont introduites dans la colonne (3) de distillation sous pression réduite à des altitudes ($N_1$, $N_2$, $N_3$) qui décroissent dans l'ordre de la succession des cyclones (5, 6, 7) entre le four (2) et la colonne (3) de distillation.

5. Procédé conforme à l'une des revendications 1 à 4, caractérisé en ce que le flux du chauffage appliqué est différent dans les étages de séparation et est adapté à la nature de chaque phase liquide.

**Claims**

1. A process for distilling liquid thermosensitive hydrocarbon products in particular the residue drawn off from the bottom of an atmospheric distillation column (1) of a crude petroleum refinery, the process including heating the products in a furnace (2) to the maximum temperature allowable for avoiding all thermal deterioration of the products into at least one vacuum distillation column, characterized by :
   passing the liquid product (4) leaving the furnace (2) through a series of centrifugal separation stages (5, 6, 7), the pressure in said stages being intermediate between atmospheric pressure and the pressure inside the vacuum distillation column (3) and said pressure decreasing successively in the separation stages (5, 6, 7),
   conducting said liquid product into contact with a side wall of each stage and heating said side wall to a temperature sufficient to partially vaporize the liquid product, said temperature being close to the maximum value allowable for avoiding all thermal deterioration cf the product ;
   drawing a vapor phase (11, 12, 13) formed in each stage in a central zone (8, 9, 10) of the stage and then introducing said vapor phase into a vacuum distillation column ; and
   taking the liquid phase obtained in each stage and introducing said liquid phase into the following separation stage or, in the case of the last stage (7), directly into the distillation column (3).

2. A process according to claim 1, characterized in that the separation stages (5, 6, 7) are cyclones.

3. A process according to any of claims 1 or 2, used for distillating at atmosphere pressure the petroleum residues, characterized in that the temperature prevailing inside the furnace (2) is between 390 and 420°C, the pressure inside the vacuum distillation column (3) is between 20 and 60 mm Hg, and the pressure inside the separation stages (5, 6, 7) decreases successively between atmospheric pressure and about 60 mm Hg.

4. A process according to claim 2 or 3, characterized in that the vapor phases (11, 12, 13) drawn from the cyclones (5, 6, 7) are introduced into the vacuum distillation column (3) at levels (N1, N2, N3) which decrease in the succession of the cyclones (5, 6, 7) between the furnace (2) and the vacuum distillation column (3).

5. A process according to any one of claims 1 to 4, wherein the heat flux delivered to each separation stage is different and is adapted to nature of each liquid phase.

**Patentansprüche**

1. Verfahren zum Destillieren von wärmeempfindlichen Kohlenwasserstoff-Flüssigprodukten, insbesondere dem am Boden der Normaldruckdestillationskolonne (1) einer Erdölraffinerie abgezogenen Toprückstand, bei welchem Verfahren diese Produkte in einem Ofen (2) auf eine im Hinblick auf eine Vermeidung jeglichen thermischen Abbaus zulässige Maximaltemperatur erwärmt werden und dann in mindestens eine Unterdruckdestillationskolonne eingeleitet werden, dadurch gekennzeichnet,
   - daß das den Ofen (2) verlassende Flüssigprodukt (4) einer Reihe von Schleudertrennstufen (5,6,7) zugeführt wird, in denen der Druck zwischen dem Atmosphärendruck und dem in der Unterdruckdestillationskolonne (3) herrschenden Druck liegt, wobei dieser Druck in den Trennstufen (5,6,7) allmählich abnimmt,
   - daß das Flüssigprodukt in Kontakt mit der Seitenwand jeder Trennstufe in Kontakt gebracht wird und durch diese Seitenwand auf eine Temperatur erwärmt wird, die ausreicht, um das Flüssigprodukt teilweise zu verdampfen, wobei diese Temperatur nahe dem im Hinblick auf die Vermeidung jeglichen thermischen Abbaus zulässigen Maximalwert liegt,
   - daß die in jeder Stufe gebildete Dampfphase (11,12,13) in der zentralen Zone (8,9,10) der Stufe abgezogen und in eine Unterdruckdestillationskolonne eingeleitet wird,
   - und daß die in jeder Stufe erhaltene Flüssigphase abgezogen und in die nachfolgende Trennstufe oder im Falle der letzten Stufe (7) direkt in die Destillationskolonne (3) eingeleitet wird.

2. Verfahren nach Anspruch 1, dadurch gekennzeichnet, daß die Trennstufen (5,6,7) Zyklone sind.

3. Verfahren nach Anspruch 1 oder 2, angewendet bei der Destillation von Toprückständen, dadurch gekennzeichnet, daß die im Inneren des Ofens (2) vorherrschende Temperatur zwischen 390° und 420°C liegt, daß der Druck im Inneren der Unterdruckdestillationskolonne (3) zwischen 10 und 60 mm QS beträgt, und daß der Druck im Inneren der Trennstufen (5,6,7) allmählich zwischen dem Atmosphärendruck und ca. 60 mm QS abnimmt.

4. Verfahren nach Anspruch 2 oder 3, dadurch gekennzeichnet, daß die in den Zyklonen (5,6,7) abgezogenen Dampfphasen (11,12,13) in die Unterdruckdestillationskolonne (3) auf Niveaus (N₁,N₂,N₃) eingeleitet werden, die in der Reihenfolge der Zyklone (5,6,7) zwischen dem Ofen (2) und der Destillationskolonne (3) niedriger werden.

5. Verfahren nach einem der Ansprüche 1 bis 4, dadurch gekennzeichnet, daß der angewendete Heizfluß in den Trennstufen unterschiedlich ist und an die Natur jeder Flüssigphase angepaßt ist.

## FIG_1

## FIG.2